# EUROPÄISCHE PATENTANMELDUNG

(11) **EP 4 201 631 A1**
(43) Veröffentlichungstag der Anmeldung: **28.06.2023**
(21) Anmeldenummer: 21217328.0
(22) Anmeldetag: 23.12.2021
(51) Int. Cl.: B29C 45/14, B29C 33/00, B29C 45/26, B29C 33/12

(54) **NIVELLIEREINSATZ FÜR GLASUMSPRITZWERKZEUGE**

(71) Anmelder: Stefan Pfaff Werkzeug- und Formenbau GmbH Co KG, 88167 Röthenbach im Allgäu (DE)
(72) Erfinder: Bühler, Daniel, 88239 Wangen im Allgäu (DE)
(74) Vertreter: Otten, Roth, Dobler & Partner mbB Patentanwälte

(57) **Zusammenfassung**

Es wird ein Nivelliereinsatz (1) für Spritzgießwerkzeuge (2) zum Umspritzen einer Glasscheibe (3), welche eine Form (4) zur Auflage und/oder Aufnahme der zu umspritzenden Glasscheibe (3) aufweisen,, vorgeschlagen, der ein wirtschaftlich günstigeres Betreiben des Spritzgießwerkzeugs ermöglicht. Dies wird erfindungsgemäß dadurch erreicht, dass der Nivelliereinsatz (1) aus wenigstens einem Blech (5, 5') aus Metall, insbesondere Stahl, bevorzugt Edelstahl, gebildet ist.

## Beschreibung

Die Erfindung betrifft einen Nivelliereinsatz für Spritzgießwerkzeuge zum Umspritzen einer Glasscheibe gemäß dem Oberbegriff des Anspruchs 1.

### Stand der Technik:

Beim Glasumspritzen werden Gläser wie beispielsweise Fahrzeugfenster in Spritzgießwerkzeuge eingelegt und mit Kunststoff-Formmassen vollumfänglich oder abschnittsweise umspritzt, um z.B. eine Dichtung auszubilden. Dabei muss die Glasscheibe gegenüber der Gussform zuverlässig abgedichtet sein, um einen definierten Hohlraum auszubilden bzw. damit möglichst kein Gussmaterial das Werkstück bzw. die Glasscheibe verunreinigt bzw. kein sog. Austrieb entsteht.

Aufgrund von fertigungsbedingter Dickentoleranzen sowie Geometrieabweichungen der Gläser kommt es hier immer wieder zum Bruch des spröden Glasmaterials, wenn die Abdichtung zu stark auf das Glas einwirkt oder zu Kunststoff-Überspritzungen auf der Glasscheibe, falls die Einwirkung zu schwach ist. Dies wiederum führt dazu, dass Splitter aufwendig manuell aus der Spritzgussmaschine bzw. der Kunststoff von der Scheibe entfernt werden muss. In beiden Fällen werden dadurch Arbeitskräfte unnötig gebunden und Ressourcen verschwendet, sodass aufwendige Produktionsunterbrechungen und höhere Fertigungskosten entstehen.

Um dies zu vermeiden, wird versucht, werkzeugseitig darauf zu reagieren.

Je nach Bauteilgeometrie kann so kann beispielsweise ein Glassattel genannter, separat herausgetrennter Werkzeugeinsatz genutzt werden, welcher in der Position relativ zum Glas mechanisch mit Schrauben, Unterlegscheiben oder auch hydraulisch verändert werden kann, wobei hierdurch Maß- und Geometrieabweichungen nur bedingt ausgeglichen werden können. Die Anwendung solch eines Glassattels ist jedoch dadurch eingeschränkt, dass nicht jedes Produkt mit solch einem Glassattel ausgestattet werden kann. Zudem sind die Herstellungs- und Unterhaltungskosten relativ hoch.

Eine weitere Möglichkeit die Glastoleranzen auszugleichen ist die Verwendung von Kunststoffeinsätzen, welche in das Werkzeug geschraubt werden. Diese sind jedoch durch die Arbeitstemperaturen von bis zu 200°C und der hohen Stückzahl in der Serienproduktion stark belastet, sodass die Einsätze als Verschleißteile häufig ausgetauscht werden müssen, um keine Undichtigkeiten beim Spritzgießen zu erhalten bzw. den hierdurch entstehenden, sog. Austrieb zu verhindern.

Aus der DE 20 2019 100 414 U1 sind weiter Kunststoffeinsätze bekannt, bei denen keine separaten Fixierelemente wie die bislang üblichen Schrauben für das Fixieren und Lösen des Abdichtelementes notwendig sind, wobei es jedoch auch hier zum Verschleiß am Ausgleichselement durch hohe Arbeitstemperaturen und darüber hinaus zu hohen Kosten für das Spritzgusswerkzeug zur Herstellung solcher Kunststoffeinsätze kommt.

### Aufgabe und Vorteile der Erfindung:

Aufgabe der Erfindung ist es demgegenüber, einen Nivelliereinsatz für Spritzgießwerkzeuge zum Umspritzen einer Glasscheibe vorzuschlagen, der ein wirtschaftlich günstigeres Betreiben des Spritzgießwerkzeugs ermöglicht.

Diese Aufgabe wird, ausgehend von einem Nivelliereinsatz der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich ein erfindungsgemäßer Nivelliereinsatz dadurch aus, dass aus wenigstens einem Blech aus Metall, insbesondere Stahl, bevorzugt Edelstahl, gebildet ist.

Metall, insbesondere Stahl, ist besonders im direkten Vergleich mit den meisten Kunststoffen widerstandsfähig in Bezug auf Temperaturwechsel, sowie Druck und Abrieb. Gleichzeitig zeigte sich wider Erwarten, dass bei Nivelliereinlagen aus Metall das Glas nicht mehr Schaden durch Kratzer oder Ähnliches nimmt, als bei der Verwendung von Kunststoffeinsätzen.

Denkbar ist auch, dass der Nivelliereinsatz bei einer Ausführung mit zwei oder mehr Blechen als Stapel der zwei oder mehr Bleche ausgebildet ist. Die Verwendung von mehreren dünnen Blechen hat den Vorteil, dass man nicht mehrere, in unterschiedlichen Maßen vorgefertigte Einsätze bereithalten muss, sondern man mit einfachen Handgriffen die Bleche ergänzt und übereinander stapelt oder aber aus dem Stapel des Nivelliereinsatzes entfernt, bis die benötigte Höhe des Nivelliereinsatzes erreicht ist.

Durch Kombination von verschiedenen Blechdicken kann so nahezu jede beliebige Höhe erreicht und für jedes Glas auftretende Schwankungen einfach ausgeglichen werden.

In einer bevorzugten Ausführung weist wenigstens ein Blech eine gewellte und/oder von einer ebenen Fläche abweichende Oberflächenstruktur auf, um, insbesondere durch elastische Verformung, Druck auf die flächigen Seiten des wenigstens einen Blechs aufzunehmen. Das Blech kann sich dabei bei geschickter Wahl der Oberflächenstruktur unter Druck so verformen, dass dieser Druck wenigstens teilweise ausgeglichen wird, wodurch der Druck auf das Glas reduziert wird und so Glasbruch entgegengewirkt wird. Da das Blech sich zuerst nur an den Stellen mit höherem Druck verformt, passt sich das Blech gleichzeitig auch automatisch an die Form des Glases an und kompensiert Schwankungen der Glasdicke und Glasgeometrie.

Möglich ist auch die Kombination aus Blechen, die eben ausgebildet sind, und Blechen, die eine von einer ebenen Fläche abweichende Oberflächenstruktur aufweisen, also etwa gewellt oder gewölbt sind.

Bevorzugt weist das wenigstens eine Blech eine drahterodierte, lasergeschnittene oder wasserstrahlgeschnittene Kontur auf. Mithilfe solcher Konturen können die Bleche gleichmäßig übereinander und an die Artikelkontur angepasst in dem Spritzgießwerkzeug positioniert werden. Denkbar sind auch Konturen, die auf andere Art und Weisen hergestellt sind.

Bevorzugt ist wenigstens ein Befestigungselement in Form einer Buchse, eines Stifts, eines Gewindebolzens oder eines Clips an das wenigstens eine Blech eingebracht. Hierdurch wird sichergestellt, dass das Blech während des Einspannens der Glasscheibe und während des Spritzvorgangs nicht verrutscht, sodass eine dauerhafte Qualitätssicherung gewährleistet werden kann.

Erfindungsgemäß weist ein Spritzgießwerkzeug zum Umspritzen einer Glasscheibe, welches eine Form zur Aufnahmen der zu umspritzenden Glasscheibe aufweist, welche entlang einer Trennebene in wenigstens zwei Formteile auftrennbar ist, wenigstens eines der Formteile wenigstens einen Nivelliereinsatz wie oben beschrieben auf. Die Glasscheibe wird zum Umspritzen zwischen den Formteilen auf den wenigstens einen Nivelliereinsatz gelegt und eingespannt. Kunststoff-Formmasse wird in einen hierbei entstehenden Hohlraum an das Glas gepresst, wobei der Nivelliereinsatz kleine fertigungsbedingte Dicketoleranzen und Geometrieabweichungen des Glases ausgleicht.

In einer bevorzugten Ausführung ist/sind wenigstens ein Nivelliereinsatz, insbesondere zwei Nivelliereinsätze aus jeweils wenigstens einem Blech vorgesehen, der/die auf wenigstens einer Seite der Trennebene und/oder auf beiden Seiten der Trennebene angeordnet ist/sind. Bei einer Anordnung zweier oder mehrerer Nivelliereinsätze, insbesondere auf beiden Seiten der Glasscheibe, können Abweichungen der Glasgeometrie noch besser ausgeglichen und Kunststoffüberspritzungen auf dem Glas oder Glasbruch noch besser vermieden werden.

Vorzugsweise weist die Form und/oder wenigstens eines der Formteile eine an die Trennebene des Spritzgießwerkzeugs angrenzende Aufnahmevorrichtung zur Aufnahme und Halterung der Glasscheibe beim Umspritzen und/oder zur Ausbildung eines beim Umspritzen zu verfüllenden Umspritzbereichs auf. Durch eine solche Maßnahme kann sichergestellt werden, dass die Position und Größe der Umspritzungen stets gleich sind, sodass der Ausschuss aus diesen Gründen minimal gehalten werden kann.

Bevorzugt weist die Form und/oder wenigstens eines der Formteile eine Einsatzaufnahmevorrichtung auf, die in Verbindung mit der Aufnahmevorrichtung steht und/oder an die Aufnahmevorrichtung angrenzt und/oder in die Aufnahmevorrichtung integriert ist und/oder an die Trennebene angrenzt, wobei die Einsatzaufnahmevorrichtung zur Aufnahme des wenigstens einen Nivelliereinsatzes ausgebildet ist, sodass die zu halternde Glasscheibe wenigstens teilweise an einem der Nivelliereinsätze, insbesondere bei einer Ausführung mit zwei oder mehr Blechen an einem der im wenigstens einen Nivelliereinsatzes äußeren Blech anliegt. Der wenigstens eine Nivelliereinsatz ist so stets an derselben Position in der Form, bzw. des Formteils und liegt ebenfalls stets an der gleichen Stelle der Glasscheibe an. Zudem können die Nivelliereinsätze nicht verrutschen, sodass der Spritzvorgang weniger anfällig für Fehler ist, wodurch weniger Kunststoffüberspritzungen auf dem Glas oder Glasbrüche entstehen.

Vorteilig ist, wenn auf einer oder auf beiden Seiten der Trennebene jeweils die Einsatzaufnahmevorrichtung und/oder der Nivelliereinsatz und/oder wenigstens eine der Einsatzaufnahmevorrichtung und/oder wenigstens einer der Nivelliereinätze angeordnet ist. Auf diese Art und Weise kann die Ausgestaltung des Spritzgießwerkzeugs kompakt ausgebildet werden. Bei beidseitiger Anordnung kann der Druck, welcher beim Einspannen und Abdichten der Glasscheibe zum Umspritzen entsteht, gleichmäßig verteilt werden. Gleichzeitig können so produktionsbedingte Geometrieabweichungen der Glasscheibe auch auf beiden Seiten ausgeglichen werden.

Denkbar ist, dass wenigstens ein Befestigungselement in Form einer Buchse, eines Stifts, eines Gewindebolzens oder eines Clips vorgesehen ist, welches an den wenigstens einen Nivelliereinsatz und/oder den Nivellierstapel ankoppelt und haltert. Auf diese Art kann der Nivelliereinsatz zusätzlich vor ungewolltem Verrutschen gesichert werden.

Möglich ist auch eine Ausgestaltung, bei der eine Befestigungsvorrichtung zur Befestigung des wenigstens einen Nivelliereinsatzes und/oder zum Zusammenwirken mit dem Befestigungselement und/oder zur Halterung des Befestigungselements vorgesehen ist. Dies ist eine zusätzliche Absicherung zur Verhinderung von ungewollten Deplatzierungen des Nivelliereinsatzes.

Erfindungsgemäß zeichnet sich ein Verfahren zum Umspritzen einer Glasscheibe, wobei die Glasscheibe in eine Form oder zwei Formteile aufgenommen wird, dadurch aus, dass zwischen der Glasscheibe und der Form bzw. wenigstens einem der beiden Formteile wenigstens ein Nivelliereinsatz wie oben eingesetzt wird.

### Beschreibung eines Ausführungsbeispiels:

Ein Ausführungsbeispiel der Erfindung ist in der Zeichnung dargestellt und wird anhand der Figuren nachfolgend näher erläutert.

Im Einzelnen zeigt:
- Figur 1: schematisch dargestellt einen Nivelliereinsatz gemäß der Erfindung,
- Figur 2: einen schematischen Aufbau eines Spritzgießwerkzeugs mit einem Nivelliereinsatz gemäß der Erfindung, und
- Figur 3: einen schematischen Aufbau eines Spritzgießwerkzeugs mit Nivelliereinsätzen auf beiden Seiten der Glasscheibe gemäß der Erfindung.

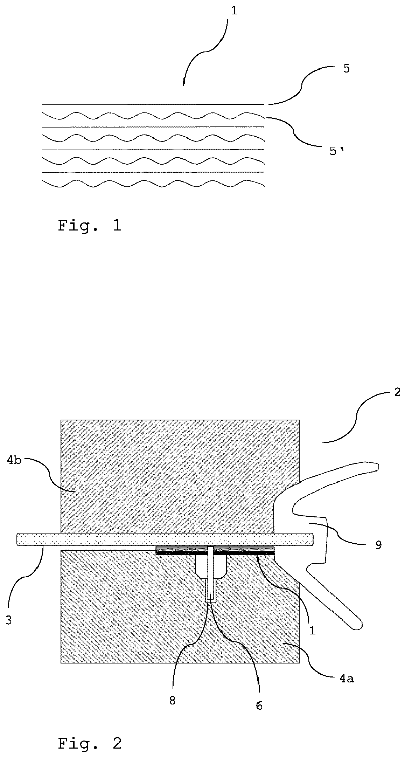

In Figur 1 ist eine mögliche Ausführung eines aus mehreren Blechen 5, 5' bestehenden Nivelliereinsatzes 1 dargestellt. Dabei sind abwechselnd gerade Bleche 5 und gewellte Bleche 5' zu einem Stapel geschichtet. Beim Einspannen der Glasscheibe mittels eines oder mehrerer solcher Nivellierstapel können sich die gewellten Bleche 5' durch die auf die Nivelliereinsätze 1 und die Glasscheibe 3 ausgeübte Kraft lokal so verformen, dass sie sich einer geraden Form annähern. Die Kraft wird so an den Stellen der Glasscheibe 3, wo sie ohne solche ausgleichende Maßnahmen zu Glasbruch führen würde, auf die Nivelliereinsätze 1 verteilt und von den lokalen Stellen der Glasscheibe 3 abgeleitet. An den Stellen der Glasscheibe 3, bei der aus geometrischen Gründen die Kraft weniger stark wirkt, verformen sich die gewellten Bleche 5' weniger bis gar nicht.

In Figur 2 ist eine Ausführungsform eines Spritzgießwerkezeugs 2 im Sinne der Erfindung mit zu einem Nivelliereinsatz 1 gestapelten Blechen 5, 5' schematisch dargestellt. Eine Glasscheibe 3 ist zwischen zwei Formteile 4a, 4b einer Form 4 des Spritzgießwerkzeugs 2 eingebracht. Da Glasscheiben 3 bei der Herstellung teils erheblichen Dicketoleranzen und Geometrieabweichungen unterliegen, muss das Werkzeug zur Umspritzung an die jeweilige Glasscheibe angepasst werden, da es sonst bei zu geringem Glasspalt in der Form 4 Glasbruch und bei zu breitem Glasspalt Überspritzungen bei der Anbringung einer Umspritzung 8 an der Glasscheibe 3 führen kann.

Hierfür wird die Form 4 mit wenigstens einem Nivelliereinsatz 1 aus einem Blech 5, 5' oder einem Stapel bestehend aus wenigstens zwei Blechen 5, 5' ergänzt, der an die Glasscheibe 3 angrenzt. Der abgebildete Nivelliereinsatz 1 besteht hier aus mehreren Blechen 5, 5', die übereinander geschichtet sind, und ist dabei in eine in der Form 4 eingebrachte Aufnahmevorrichtung aufgenommen, damit dieser die Glasscheibe 3 stets an der gleichen Stelle kontaktiert, sodass die Qualität der Umspritzung beibehalten werden kann.

Über ein zusätzliches Befestigungselement 6 kann der Nivelliereinsatz 1 oder auch ein einzelnes Blech 5, 5' an der Aufnahmevorrichtung oder an einer Befestigungsvorrichtung 7 oder aber auch direkt an der Form 4 bzw. wie hier dargestellt, an einem der Formteile 4a, 4b befestigt werden.

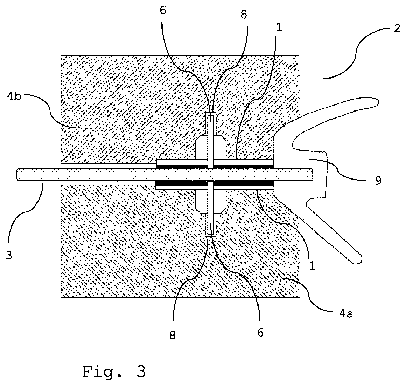

Figur 3 zeigt eine Ausführungsform der Erfindung, bei der zwei aus mehreren Blechen 5, 5' bestehenden Nivelliereinsätze 1 auf beiden Seiten der Trennebene der Form 4 bzw. der Glasscheibe 3 angebracht sind. So können die Geometrieabweichungen auf beiden Seiten der Glasscheibe 3 ausgeglichen werden.

### Bezugszeichenliste:

- 1: Nivelliereinsatz
- 2: Spritzgießwerkzeug
- 3: Glasscheibe
- 4: Form
- 4a, 4b: Formteil
- 5, 5': Blech
- 6: Befestigungselement
- 7: Befestigungsvorrichtung
- 8: Umspritzung

## Patentansprüche

1. Nivelliereinsatz (1) für Spritzgießwerkzeuge (2) zum Umspritzen einer Glasscheibe (3), welche eine Form (4) zur Auflage und/oder Aufnahme der zu umspritzenden Glasscheibe (3) aufweisen, **dadurch gekennzeichnet, dass** der Nivelliereinsatz (1) aus wenigstens einem Blech (5, 5') aus Metall, insbesondere Stahl, bevorzugt Edelstahl, gebildet ist.

2. Nivelliereinsatz (1) nach Anspruch 1, **dadurch gekennzeichnet, dass** der Nivelliereinsatz (1) bei einer Ausführung mit zwei oder mehr Blechen (5, 5') als Stapel der zwei oder mehr Bleche (5, 5') ausgebildet ist.

3. Nivelliereinsatz (1) nach einem der vorgenannten Ansprüche, **dadurch gekennzeichnet, dass** wenigstens ein Blech (5, 5') eine gewellte und/oder von einer ebenen Fläche abweichende Oberflächenstruktur aufweist, um, insbesondere durch elastische Verformung, Druck auf die flächigen Seiten des wenigstens einen Blechs (5, 5') aufzunehmen.

4. Nivelliereinsatz (1) nach einem der vorgenannten Ansprüche, **dadurch gekennzeichnet, dass** das wenigstens eine Blech (5, 5') eine drahterodierte, lasergeschnittene oder wasserstrahlgeschnittene Kontur aufweist.

5. Nivelliereinsatz (1) nach einem der vorgenannten Ansprüche, **dadurch gekennzeichnet, dass** wenigstens ein Befestigungselement (6) in Form einer Buchse, eines Stifts, eines Gewindebolzens oder eines Clips an das wenigstens eine Blech (5, 5') eingebracht ist.

6. Spritzgießwerkzeug (2) zum Umspritzen einer Glasscheibe (3), welches eine Form (4) zur Aufnahmen der zu umspritzenden Glasscheibe (3) aufweist, welche entlang einer Trennebene in wenigstens zwei Formteile (4a, 4b) auftrennbar ist, **dadurch gekennzeichnet, dass** wenigstens eines der Formteile (4a, 4b) wenigstens einen Nivelliereinsatz (1) nach einem der vorgenannten Ansprüche aufweist.

7. Spritzgießwerkzeug (2) nach einem der vorgenannten Ansprüche, **dadurch gekennzeichnet, dass** wenigstens ein Nivelliereinsatz (1), insbesondere zwei Nivelliereinsätze (1) vorgesehen ist/sind, der/die auf wenigstens einer Seite der Trennebene und/oder auf beiden Seiten der Trennebene angeordnet ist/sind.

8. Spritzgießwerkzeug (2) nach einem der vorgenannten Ansprüche, **dadurch gekennzeichnet, dass** die Form (4) und/oder wenigstens eines der Formteile (4a, 4b) eine an die Trennebene des Spritzgießwerkzeugs (2) angrenzende Aufnahmevorrichtung zur Aufnahme und Halterung der Glasscheibe (3) beim Umspritzen und/oder zur Ausbildung eines beim Umspritzen zu verfüllenden Umspritzbereichs aufweist.

9. Spritzgießwerkzeug (2) nach einem der vorgenannten Ansprüche,
**dadurch gekennzeichnet, dass** die Form (4) und/oder wenigstens eines der Formteile (4a, 4b) eine Einsatzaufnahmevorrichtung aufweist, die
• in Verbindung mit der Aufnahmevorrichtung steht und/oder
• an die Aufnahmevorrichtung angrenzt und/oder
• in die Aufnahmevorrichtung integriert ist und/oder
• an die Trennebene angrenzt, und/oder
• eine Mulde und/oder eine Ausnehmung in der Form (4) und/oder im Formteil ausbildet,
wobei die Einsatzaufnahmevorrichtung zur Aufnahme des wenigstens einen Nivelliereinsatzes (1) ausgebildet ist, sodass die zu halternde Glasscheibe (3) wenigstens teilweise an einem der Nivelliereinsätze (1), insbesondere bei einer Ausführung mit zwei oder mehr Blechen (5, 5') an einem der im wenigstens einen Nivelliereinsatzes (1) äußeren Blech (5, 5') anliegt.

10. Spritzgießwerkzeug (2) nach einem der vorgenannten Ansprüche, **dadurch gekennzeichnet, dass** auf einer oder auf beiden Seiten der Trennebene jeweils die Einsatzaufnahmevorrichtung und/oder der Nivelliereinsatz (1) und/oder wenigstens eine der Einsatzaufnahmevorrichtung und/oder wenigstens einer der Nivelliereinätze (1) angeordnet ist.

11. Spritzgießwerkzeug (2) nach einem der vorgenannten Ansprüche, **dadurch gekennzeichnet, dass** wenigstens ein Befestigungselement (6) in Form einer Buchse, eines Stifts, eines Gewindebolzens oder eines Clips vorgesehen ist, welches an den wenigstens einen Nivelliereinsatz (1) ankoppelt und haltert.

12. Spritzgießwerkzeug (2) nach einem der vorgenannten Ansprüche, **dadurch gekennzeichnet, dass** eine Befestigungsvorrichtung (7)
• zur Befestigung des wenigstens einen Nivelliereinsatzes (1) und/oder
• zum Zusammenwirken mit dem Befestigungselement (6) und/oder
• zur Halterung des Befestigungselements (6) vorgesehen ist.

13. Verfahren zum Umspritzen einer Glasscheibe (3), wobei die Glasscheibe (3) in eine Form (4) oder zwei Formteile (4a, 4b) aufgenommen wird, wobei zwischen der Glasscheibe (3) und der Form (4) bzw. wenigstens einem der beiden Formteile (4a, 4b) wenigstens ein Nivelliereinsatz (1) nach einem der vorgenannten Ansprüche eingesetzt wird.

## Geänderte Patentansprüche

### Geänderte Patentansprüche gemäss Regel 137(2) EPÜ.

1. Nivelliereinsatz (1) für Spritzgießwerkzeuge (2) zum Umspritzen einer Glasscheibe (3), welche eine Form (4) zur Auflage und/oder Aufnahme der zu umspritzenden Glasscheibe (3) aufweisen, **dadurch gekennzeichnet, dass** der Nivelliereinsatz (1) aus zwei oder mehr Blechen (5, 5')als Stapel der zwei oder mehr Bleche (5, 5') ausgebildet ist , wobei die zwei oder mehr Bleche (5, 5') aus Metall, insbesondere Stahl, bevorzugt Edelstahl, gebildet sind.

2. Nivelliereinsatz (1) nach einem der vorgenannten Ansprüche, **dadurch gekennzeichnet, dass** wenigstens ein Blech (5, 5') eine gewellte und/oder von einer ebenen Fläche abweichende Oberflächenstruktur aufweist, um, insbesondere durch elastische Verformung, Druck auf die flächigen Seiten des wenigstens einen Blechs (5, 5') aufzunehmen.

3. Nivelliereinsatz (1) nach einem der vorgenannten Ansprüche, **dadurch gekennzeichnet, dass** das wenigstens eine Blech (5, 5') eine drahterodierte, lasergeschnittene oder wasserstrahlgeschnittene Kontur aufweist.

4. Nivelliereinsatz (1) nach einem der vorgenannten Ansprüche, **dadurch gekennzeichnet, dass** wenigstens ein Befestigungselement (6) in Form einer Buchse, eines Stifts, eines Gewindebolzens oder eines Clips an das wenigstens eine Blech (5, 5') eingebracht ist.

5. Spritzgießwerkzeug (2) zum Umspritzen einer Glasscheibe (3), welches eine Form (4) zur Aufnahmen der zu umspritzenden Glasscheibe (3) aufweist, welche entlang einer Trennebene in wenigstens zwei Formteile (4a, 4b) auftrennbar ist, **dadurch gekennzeichnet, dass** wenigstens eines der Formteile (4a, 4b) wenigstens einen Nivelliereinsatz (1) nach einem der vorgenannten Ansprüche aufweist.

6. Spritzgießwerkzeug (2) nach einem der vorgenannten Ansprüche, **dadurch gekennzeichnet, dass** wenigstens ein Nivelliereinsatz (1), insbesondere zwei Nivelliereinsätze (1) vorgesehen ist/sind, der/die auf wenigstens einer Seite der Trennebene und/oder auf beiden Seiten der Trennebene angeordnet ist/sind.

7. Spritzgießwerkzeug (2) nach einem der vorgenannten Ansprüche, **dadurch gekennzeichnet, dass** die Form (4) und/oder wenigstens eines der Formteile (4a, 4b) eine an die Trennebene des Spritzgießwerkzeugs (2) angrenzende Aufnahmevorrichtung zur Aufnahme und Halterung der Glasscheibe (3) beim Umspritzen und/oder zur Ausbildung eines beim Umspritzen zu verfüllenden Umspritzbereichs aufweist.

8. Spritzgießwerkzeug (2) nach einem der vorgenannten Ansprüche, **dadurch gekennzeichnet, dass** die Form (4) und/oder wenigstens eines der Formteile (4a, 4b) eine Einsatzaufnahmevorrichtung aufweist, die
• in Verbindung mit der Aufnahmevorrichtung steht und/oder
• an die Aufnahmevorrichtung angrenzt und/oder
• in die Aufnahmevorrichtung integriert ist und/oder
• an die Trennebene angrenzt, und/oder
• eine Mulde und/oder eine Ausnehmung in der Form (4)
und/oder im Formteil ausbildet,
wobei die Einsatzaufnahmevorrichtung zur Aufnahme des wenigstens einen Nivelliereinsatzes (1) ausgebildet ist, sodass die zu halternde Glasscheibe (3) wenigstens teilweise an einem der Nivelliereinsätze (1), insbesondere bei einer Ausführung mit zwei oder mehr Blechen (5, 5') an einem der im wenigstens einen Nivelliereinsatzes (1) äußeren Blech (5, 5') anliegt.

9. Spritzgießwerkzeug (2) nach einem der vorgenannten Ansprüche, **dadurch gekennzeichnet, dass** auf einer oder auf beiden Seiten der Trennebene jeweils die Einsatzaufnahmevorrichtung und/oder der Nivelliereinsatz (1) und/oder wenigstens eine der Einsatzaufnahmevorrichtung und/oder wenigstens einer der Nivelliereinätze (1) angeordnet ist.

10. Spritzgießwerkzeug (2) nach einem der vorgenannten Ansprüche, **dadurch gekennzeichnet, dass** wenigstens ein Befestigungselement (6) in Form einer Buchse, eines Stifts, eines Gewindebolzens oder eines Clips vorgesehen ist, welches an den wenigstens einen Nivelliereinsatz (1) ankoppelt und haltert.

11. Spritzgießwerkzeug (2) nach einem der vorgenannten Ansprüche, **dadurch gekennzeichnet, dass** eine Befestigungsvorrichtung (7)
• zur Befestigung des wenigstens einen Nivelliereinsatzes (1) und/oder
• zum Zusammenwirken mit dem Befestigungselement (6) und/oder
• zur Halterung des Befestigungselements (6) vorgesehen ist.

12. Verfahren zum Umspritzen einer Glasscheibe (3), wobei die Glasscheibe (3) in eine Form (4) oder zwei Formteile (4a, 4b) aufgenommen wird, wobei zwischen der Glasscheibe (3) und der Form (4) bzw. wenigstens einem der beiden Formteile (4a, 4b) wenigstens ein Nivelliereinsatz (1) nach einem der vorgenannten Ansprüche eingesetzt wird.
